# FASCICULE DE BREVET EUROPEEN

(11) **EP 0 347 269 B1**
(45) Date de publication et mention de la délivrance du brevet: **31.03.1993**
(21) Numéro de dépôt: 89401327.5
(22) Date de dépôt: 12.05.1989
(51) Int. Cl.: B05C 11/10, B29C 47/36, E06B 3/66, B29C 31/04

(54) **Amélioration à la fabrication d'un cordon de matière organique destiné à servir de joint et d'intercalaire dans un vitrage multiple**
Fertigung eines Stranges aus organischem Material, bestimmt für die Anwendung als Dichtung und als Abstandshalter in der Mehrfachverglasung
Manufacture of a strand of organic material serving as a joint and distance keeper in multiple glazing

(30) Priorité: 17.06.1988 FR 8808135
(43) Date de publication de la demande: 20.12.1989
(73) Titulaire: SAINT-GOBAIN VITRAGE INTERNATIONAL, 92400 Courbevoie (FR)
(72) Inventeur: Canaud, Michel, F-75116 Paris (FR); Dewitte, Philippe, F-60160 Thourotte (FR); Poix, René, F-60400 Noyon (FR)
(74) Mandataire: Menes, Catherine

(56) Documents cités:
- EP-A- 0 125 771
- EP-A- 0 238 380
- DE-U- 8 633 671
- FR-A- 2 426 561
- GB-A- 675 569
- GB-A- 2 162 770

## Description

La présente invention concerne la fabrication de vitrages multiples à joints en matières organiques et plus particulièrement le pompage et la distribution de ces matières organiques en vue de fournir un cordon continu destiné à servir de joint et d'intercalaire entre deux feuilles de verre consécutives d'un vitrage multiple.

Il est connu par la demande de brevet français FR-A-2294313 de fabriquer un tel cordon continu en matière du type caoutchouc butyl et de le déposer sur une plaque de verre en vue de constituer un vitrage multiple après apport d'une seconde plaque de verre. Pour fabriquer ce cordon on alimente une boudineuse avec des pains de matière organique d'environ 7 kg chacun, un pain étant en cours d'utilisation pendant que l'autre se préchauffe en vue de son utilisation prochaine. Il en résulte la nécessité de la présence constante d'une personne chargée d'alimenter la boudineuse en pains nouveaux.

Par ailleurs, la machine de boudinage est une machine lourde et assez puissante, et en conséquence assez coûteuse ; ceci en raison des performances élevées qui sont exigées pour un boudinage correct qui suppose un arrêt de l'extrusion à chaque angle du vitrage et à chaque fois un redémarrage avec un débit immédiatement constant.

Il est par ailleurs connu par la demande de brevet européen EP-A-171309 de fabriquer ce cordon continu en extrayant la matière organique à l'aide d'une pompe plongeant directement dans un fût de grande capacité rempli de ladite matière, de soumettre cette matière à diverses opérations concourant à abaisser sa viscosité d'une part et à permettre la formation d'un cordon continu régulier pouvant si nécessaire être de grande longueur et/ou de grande hauteur en vue de la réalisation de vitrages multiples de grandes dimensions et avec un espace d'air de grande épaisseur entre les plaques de verre. Ces diverses opérations qui autorisent la formation d'un cordon continu de grande longueur et/ou de grande hauteur mettent en oeuvre une première pompe, puis une pompe à engrenages, puis une réserve à volume variable et en général toute une série de dispositifs qui rendent l'installation coûteuse, complexe et qui compliquent le contrôle de la température de la matière traitée.

Il est généralement connu par la demande de brevet européen EP-A-238380, une pompe alternative plongeant dans le fût de matière organique, associée à un plateau conique chauffant appuyant sur la matière contenue dans le fût, cet ensemble étant apte à fournir un débit élevé et continu de matière organique, même une matière aussi visqueuse et aussi difficilement pompable que du caoutchouc butyl. Mais se pose alors avec une telle pompe alternative le problème de la parfaite régularité de débit au moment du changement de sens de la pompe. Etant donné que l'espace entre deux feuilles de verre consécutives du vitrage multiple ou autrement dit l'épaisseur de la lame de gaz, en général d'air, enfermée dépend directement de l'épaisseur et de la régularité d'épaisseur du cordon disposé entre lesdites deux feuilles de verre, étant donné également que les performances d'isolation du vitrage multiple, son aptitude à rester parfaitement transparent, sans buée entre les feuilles de verre dépendent de l'étanchéité des joints entre les feuilles de verre et en particulier de l'étanchéité et de la régularité du cordon en matière du type caoutchouc butyl, il importe de veiller à la parfaite qualité du cordon formant joint et intercalaire si l'on veut des vitrages bien calibrés et ayant de bonnes performances. Par ailleurs, avec des lames d'air intercalaires épaisses, le débit fourni par la pompe peut être momentanément insuffisant, alors même que son débit moyen est, lui, supérieur au débit théorique nécessaire.

La présente invention vise à permettre la fourniture d'un cordon de matière organique du type à base de caoutchouc butyl, ou plus généralement d'un cordon d'une matière à viscosité élevée, avec au moins tous les avantages et performances des installations précédentes, sans toutefois les inconvénients desdites installations.

Elle vise en particulier, en plus du débit régulier, important si désiré, un fonctionnement simple, peu coûteux tant sur le plan investissement que sur le plan entretien ou assistance au fonctionnement, en vue de la fabrication de cordons continus pour vitrages multiples de grandes dimensions et à lame d'air épaisse.

Elle vise également un traitement de la matière organique fortement visqueuse au départ, tel que la température de cette matière soit bien maîtrisée tout au long du processus qui conduit au cordon final de façon à ne pas entraîner par des malaxages, cisaillements excessifs une élévation abusive de température qui aurait pour conséquence une détérioration des qualités intrinsèques de la matière.

Elle propose pour cela un procédé de fabrication d'un cordon régulier de matière organique du type à base de caoutchouc butyl, de viscosité élevée supérieure à 35000 poises (3500 Pa.s) consistant à pomper la matière brute dans un fût à l'aide d'un ensemble piston conique chauffant/pompe alternative, à conduire par une canalisation la matière pompée jusqu'à une buse de sortie en faisant intervenir à proximité immédiate de la buse de sortie, un ensemble de compression/décompression et selon lequel on intercale à proximité de la buse de sortie, un sas limité par au moins une vanne d'entrée et une vanne de sortie.

Le sas permet de maintenir à proximité de la buse de sortie une certaine quantité de matière disponible, déjà sous pression de sorte que cette matière est immédiatement disponible dès que nécessaire.

Avantageusement la pression de la matière dans ce sas est régulée.

Selon un premier mode de réalisation de l'invention, la régulation de la pression est obtenue au moyen d'un ensemble régulateur de pression constitué essentiellement par un accumulateur/compensateur branché en dérivation sur le sas, formé d'une chambre fermée par un piston commandé en fonction de la pression affichée par un manomètre. Ainsi, quelle que soit la pression d'entrée dans le sas de la matière, la pression de sortie est régulée. Dans ce cas, le sas peut être alimenté directement en matière par l'ensemble de pompage monté sur le fût.

Cette réalisation est améliorée par une régulation de la pression de la matière fournie par la pompe alternative, ce qui est obtenu par exemple en prévoyant un second ensemble accumulateur/compensateur, situé lui en dérivation de la canalisation en amont du sas.

Lorsque des débits importants sont nécessaires, par exemple pour la réalisation de vitrages de grandes dimensions avec de plus des lames d'air intercalaires de grande épaisseur, ce premier mode de réalisation présente l'inconvénient de ne fonctionner correctement qu'à la condition de disposer de chambre d'accumulation dont le volume soit suffisant pour stocker la quantité de matière nécessaire à un vitrage donné, ce qui suppose des vérins dimensionnée en conséquence, et des puissances hydrauliques particulièrement conséquentes.

Dans ces conditions, il est préférable d'opter pour le second mode de réalisation de l'invention selon lequel la pression dans le sas est régulée non par un ensemble régulateur monté en dérivation mais par une régulation complète du débit fourni à l'entrée du sas. Pour cela, le sas est alimenté par une chambre d'extrusion fermée par un piston commandé de préférence par deux pistons actionnés par une pompe à débit constant. La pompe alternative montée sur le fût sert alors uniquement au gavage de la chambre d'extrusion, le débit - et la pression - de matière nécessaire au boudinage étant assurés directement par le piston de la chambre d'extrusion. Dans ce schéma de réalisation, la pompe alternative ne débite plus que lorsque le sas est fermé, c'est à dire lorsque la buse est en position d'attente. De préférence, le volume de la chambre d'extrusion est suffisant pour produire plusieurs volumes sans faire appel à la pompe alternative sur le fût, ceci par exemple pour autoriser le remplacement d'un fût sans interruption de la production.

Avantageusement, le circuit d'alimentation de la buse d'extrusion comporte non pas une mais deux chambres d'extrusion en parallèle, chaque chambre étant fermée à son extrémité opposée à la pompe alternative par une vanne faisant tour à tour fonction de vanne d'entrée du sas. De cette façon, une chambre d'extrusion peut être remplie par la pompe alternative tandis que l'autre chambre alimente simultanément le sas, ce qui autorise finalement des débits très élevés.

L'invention propose également une installation fournissant un cordon de matière organique du type caoutchouc butyl, et en général de matière organique à viscosité élevée supérieure à 35000 poises, installation qui comprend une pompe alternative associée à un piston conique chauffant appuyant sur la matière organique contenue dans un fût, une canalisation conduisant de la sortie de pompe à une buse de sortie et qui est équipée à proximité de la buse de sortie d'une portion de canalisation limitée par deux vannes et formant sas, munie d'un système régulateur de pression.

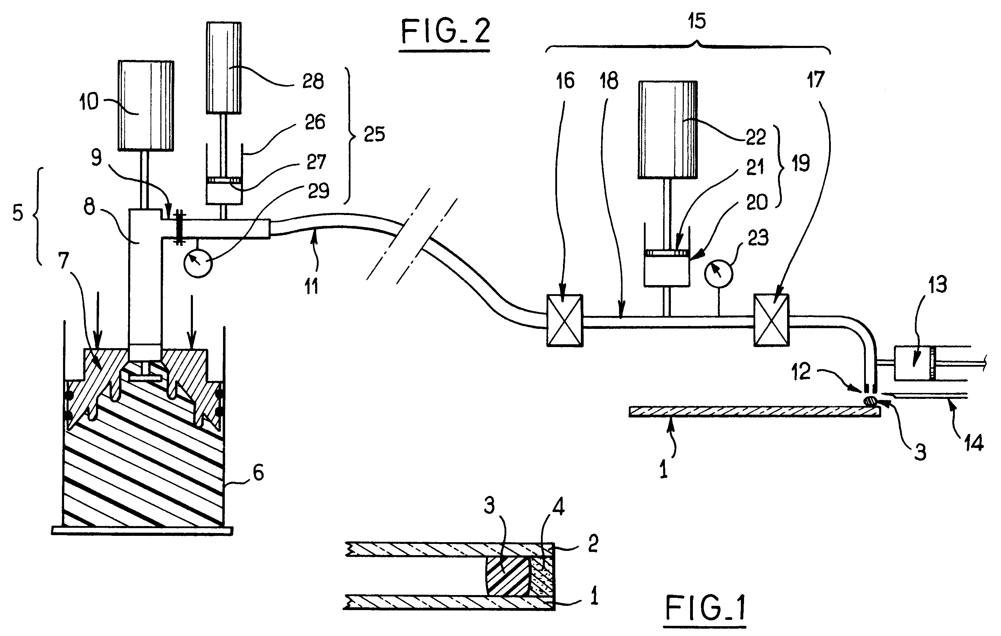

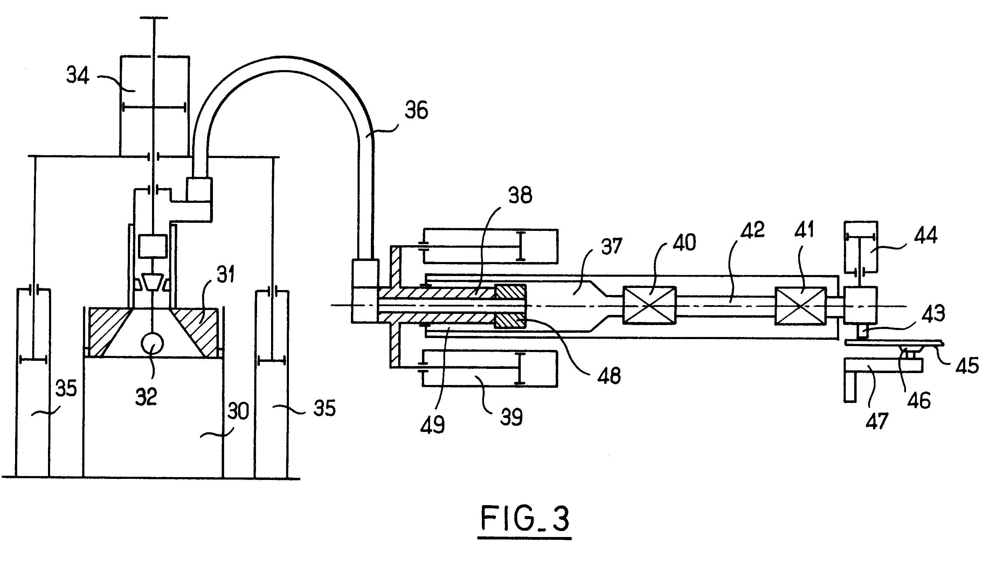

L'invention sera maintenant décrite plus en détail en se référant aux figures jointes qui représentent :
. **Figure 1** : un schéma d'un vitrage multiple à joints organiques du type de ceux que l'on peut fabriquer grâce à l'installation selon l'invention,
. **Figure 2** : un schéma de l'installation de production d'un cordon de matière plastique conforme au premier mode de réalisation de l'invention,
. **Figure 3** : un schéma de l'installation de production d'un cordon de matière plastique conforme au second mode de réalisation de l'invention.

L'installation selon l'invention est particulièrement appréciée pour fabriquer un cordon de matière organique du type caoutchouc butyl destiné à entrer dans la composition d'un vitrage multiple à joints organiques du type de celui montré schématiquement sur la figure et commercialisé par de demanderesse sous la marque "BIVER".

Un tel vitrage multiple, par exemple double est constituéde deux plaques de verre 1 et 2 assemblées à une certaine distance l'une de l'autre grâce à des joints 3 et 4 en matières organiques qui font aussi fonction d'intercalaires ou d'espaceurs des plaques de verre 1 et 2.

Le premier joint 3 est en une matière du type caoutchouc butyl comportant en outre divers ingrédients qui lui confèrent des propriétés particulières :
- une certaine tenue mécanique,
- une certaine élasticité,
- un certain collant,
- une capacité à absorber la vapeur d'eau et divers autres effluents,
- etc...,

Des compositions plus précises de la matière organique de ce joint 3 sont données à titre d'exemple dans les documents des brevets français publiés sous les numéros 2294314 et 2294313.

Ce joint 3 est déposé sous la forme d'un cordon continu calibré sur la périphérie d'une plaque de verre, par exemple la plaque 1 ; les deux extrémitésde ce cordon sont ensuite jointes de façon à constituer un ceinturage complet, puis une seconde plaque de verre est appliquée sur ce cordon, enfermant ainsi une lame d'air entre les deux plaques de verre 1 et 2 et le joint 3 en cordon.

C'est ce cordon 3 qui joue seul le rôle d'espaceur des deux plaques de verre pendant la première phase de la fabrication du vitrage multiple, c'est à dire avant la mise en place du second joint 4 et surtout c'est lui qui détermine la hauteur de la lame d'air enfermée.

Par ailleurs, du fait de sa composition à base de matières organiques étanches, essentiellement à la vapeur d'eau, il participe à l'étanchéité du vitrage multiple.

Il importe donc que le cordon qui forme le joint 3, déposé sur une plaque de verre au cours de la fabrication d'un vitrage multiple, présente une forme, et en particulier une hauteur, bien définie pour garantir une épaisseur correcte de la lame d'air enfermée et par conséquent l'épaisseur globale du vitrage multiple, et qu'il présente également une parfaite régularité de forme et plus particulièrement de hauteur sur toute sa longueur pour que les plaques de verre 1 et 2 appuient de façon identique le long de toute leur périphérie sur le cordon 3 assurant ainsi une étanchéité sans faille sur toute la périphérie.

Ce joint 3 en forme de cordon étant déposé, une seconde plaque de verre étant mise en place, un second joint 4 est coulé, injecté et en général mis en place quel que soit le moyen utilisé, dans la gorge formée par les bords des deux plaques de verre 1 et 2 et ayant pour fond le joint cordon 3, sur toute la périphérie du vitrage.

Ce second joint 4, après éventuelle polymérisation, participe avec le premier joint 3 à l'étanchéité du vitrage et au maintien des plaques de verre, assemblées et espacées à la distance définie par le joint 3. Ce joint 4 peut être en polysulfure, en polyuréthane, etc...

Donc comme dit précédemment, il importe que le cordon formant le joint 3 soit de forme et de hauteur constante.

L'installation montrée figure 2 vise à obtenir cette régularité, et vise simultanément à fournir suffisamment de débit en vue de fabriquer des vitrages de grandes dimensions, avec une lame d'air épaisse, la quantité de matière formant le joint 3 devant dans ce cas être fournie en grande quantité sans la moindre interruption et avec la régularité évoquée plus haut sous peine du risque de mauvaise qualité du vitrage.

Une éventuelle mauvaise qualité du vitrage peut se traduire par l'entrée de vapeur d'eau à l'intérieur dudit vitrage, puis, sous certaines conditions de température, par la condensation de cette vapeur d'eau et son dépôt sous forme de gouttelettes de buée sur les faces intérieures des plaques de verre 1 et/ou 2, gouttelettes impossibles à essuyer du fait de leur emplacement à l'intérieur du vitrage. Cette condensation empêche la vision claire au travers du vitrage d'une part, et elle amoindrit les propriétés d'isolation dudit vitrage.

Compte tenu du fait que les vitrages dans une construction sont prévus pour une durée de vie longue - ils sont d'ailleurs couverts par la garantie décennale au même titre que le gros oeuvre - il importe que la qualité du joint 3 en cordon, qui conditionne en grande partie la qualité du vitrage tout entier, soit parfaite, sous peine de voir apparaître les défauts précédemment mentionnés sinon tout de suite, au moins après plusieurs années de service.

L'installation de la figure 2 permet d'obtenir cette qualité et ces performances et cela pour un coût en matériel réduit, un entretien et une assistance également réduits et une excellente fiabilité.

Cette installation comporte un ensemble de pompage 5 de la matière brute dans un fût 6, ensemble comprenant essentiellement un plateau conique chauffant monté sur le fût 6 et appuyé contre la matière organique contenue dans ledit fût, une pompe 8 alternative à double effet pompant la matière organique dans l'extrémité conique du plateau 7 et la délivrant, à son extrémité de sortie 9. Le plateau conique chauffant 7, la pompe alternative 8 et leur combinaison sont décrits dans les documents de brevets publiés en EUROPE sous les numéros 171309, 238380 déjà cités, et il conviendra de s'y reporter pour d'éventuels détails supplémentaires.

La pompe 8 est actionnée par son vérin 10.

Sur la sortie 9 de la pompe 8 est branchée une canalisation 11 conduisant jusqu'à une buse 12 qui fournit le cordon 3 directement déposé sur une plaque de verre en vue de la fabrication d'un vitrage multiple.

La canalisation 11 est avantageusement flexible sur la majorité de sa longueur. Elle est par exemple raccordée comme décrit dans le document de brevet publié en EUROPE sous le numéro 251929.

Cette installation comporte également un système 13 de compression/décompression monté immédiatement en amont de la buse 12 et permettant d'obtenir un arrêt ou un redémarrage immédiats de la fourniture de cordon 3 lorsque désiré, par exemple lorsqu'après avoir déposé du cordon 3 le long d'un côté d'une plaque de verre, on arrête la fourniture du cordon à l'angle de la plaque de verre, sans toutefois couper ledit cordon, et on tourne ladite plaque de verre, ou la buse vis-à-vis de ladite plaque de verre, afin de continuer ensuite la pose du cordon 3 le long du côté suivant. Un tel système 13 de compression/décompression est décrit, ainsi que son mode de fonctionnement, dans le document de brevet français publié sous le numéro FR-2207799.

L'installation peut également être équipée, tout à fait à son extrémité, à l'extérieur de la buse 12, d'une lame 14 coupe cordon animée par un vérin non représenté et chargée de couper le cordon 3 lorsque ledit cordon a été délivré sur toute la périphérie d'un vitrage. Un tel coupe-cordon est décrit dans le document de brevet français déjà cité FR-2207799.

Cette installation comporte aussi, selon l'invention à proximité de la buse 12, sur la canalisation 11, un sas 15 limité par deux vannes, une vanne amont 16 et une vanne aval 17, formé d'une portion de canalisation 18 équipée d'un régulateur 19 de la pression de la matière organique dans ladite portion 18 de canalisation.

Ce régulateur de pression 19 comporte en dérivation de la portion 18 de la canalisation un accumulateur/compensateur, c'est-à-dire une chambre 20 dans laquelle se meut un piston 21, sous l'action d'un vérin 22 par exemple pneumatique, piloté grâce à un manomètre 23 avec un seuil de pression affiché, au passage duquel le vérin 22 est actionné ou arrêté.

Compte tenu des pressions élevées présentes dans la canalisation 11, plusieurs centaines de bars, les vannes 16 et 17 sont avantageusement motorisées par vérin rotatif hydraulique à couple élevé, au moins pour la buse 16 située du côté où la pression est la plus élevé, éventuellement à simple vérin linéaire pour la vanne 17. Ces vérins ne sont pas représentés sur les figures.

La position de l'accumulateur/compensateur sur la longueur de la portion 18 de la canalisation est ajustable ; cet accumulateur/compensateur est par exemple monté sur la dérivation branchée sensiblement au milieu de la portion de la canalisation 18.

La longueur de la portion 18 influe aussi sur la qualité des résultats ; la longueur optimale est définie en fonction des pressions de travail, de la nature de la matière organique, etc...

Pour des pressions qu'on veut réguler autour de 150 bars, alors que la pression amont à la sortie de la pompe est aux alentours de 350 bars pour une matière du type caoutchouc butyl définie plus précisément dans les documents de brevets français déjà cités FR-2294314 et 2294313, les longueurs de portion 18 sont de l'ordre de 40 cm à 1 m et par exemple de 50 cm ou 60 cm.

Avantageusement pour permettre une régulation précise des débits et des pressions de matière à la sortie de la buse 12, un second ensemble 25 de régulation de la pression est installé en sortie de la pompe 8, à l'entrée de la canalisation 11. Cet ensemble 25 est composé essentiellement d'un accumulateur/compensateur de pression, à savoir un cylindre 26 dans lequel se meut un piston 27 sous l'effet d'un vérin 28, par exemple pneumatique, piloté d'après les indications d'un manomètre 29 ayant deux valeurs de seuil de pression affichées.

L'installation fonctionne comme décrit ci-après : un fût 6 de matière organique constitutive du joint 3 des vitrages multiples, notamment une matière à base de caoutchouc butyl est amené. L'ensemble de pompage 5 est monté sur le fût 6. Le plateau conique chauffant 7 de cet ensemble 5 est pressé contre la matière contenue dans le fût 6. Comme décrit plus précisément dans les documents de brevets déjà cités EP 171 309 et EP 238 380, compte tenu de la pression, de la forme particulière du plateau 7, de la chaleur, de la matière organique un peu ramollie flue vers la pointe du plateau 7 où agit la pompe 8. La matière pompée est fournie au travers de la sortie 9 avec un débit satisfaisant, ayant une certaine régularité, cependant insuffisante pour l'application envisagée en raison essentiellement du changement de sens du piston de la pompe 8. Le fonctionnement de la pompe 8 est réglé pour fournir en sortie 9, une certaine pression, par exemple de l'ordre de 350 bars, ceci de façon à disposer en sortie de l'installation, à la sortie de la buse 12 d'une pression de matière organique acceptable pour l'application envisagée. Cette pression est fonction notamment de la vitesse de déplacement relatif des plaques de verre par rapport à la buse 12 lorsqu'est déposé le joint 3 en cordon sur lesdites plaques de verre, de la hauteur de cordon nécessaire, etc..., et elle est par exemple de l'ordre de 150 bars pour des vitesses de défilement du verre de l'ordre d'une trentaine de cm/s. En période de débit, les deux vannes 16 et 17 sont ouvertes, la matière traverse le sas 15 et sort par la buse 12. Le manomètre 23 réglé pour une valeur de seuil donnée commande la mise en action dans un sens ou dans l'autre du vérin 22, ce qui déclenche soit le remplissage de la chambre 20 par de la matière organique issue de la portion 18 de la canalisation, soit le vidage de la chambre 20 et le refoulement de la matière dans la portion 18 de la canalisation. Plus précisément lorsque la pression enregistrée par le manomètre à seuil 23 est supérieure à la valeur du seuil affichée qui correspond à la pression souhaitée dans le circuit à cet endroit, par exemple 150 bars, une pression de résistance, relativement faible, seulement capable d'empêcher la remontée trop brusque du piston 21, est appliquée par le vérin 22 sur ledit piston. Cela entraîne le remplissage de la chambre 20, et une baisse de pression dans la portion 18 de la canalisation, baisse de pression enregistrée par le manomètre 23. Lorsque cette pression passe en dessous de la valeur de seuil, cela commande l'application d'une pression plus élevée sur le vérin 22 et cela provoque le vidage de la chambre 20 et l'injection de la matière organique emmagasinée dans la chambre 20 dans la portion 18 de la canalisation.

Ainsi par un fonctionnement en tout ou rien la pression de la matière à proximité de la buse de sortie est réglée.

Avantageusement en amont de ce système est également prévu l'ensemble 25 comportant un manomètre 29 à deux seuils. Lorsque la pression de la matière est trop élevée, et est enregistrée supérieure au seuil haut affiché sur le manomètre 29, l'arrêt de la pompe 8 est commandé, ainsi que l'application sur le piston 27 par le vérin 28 d'une pression résistante relativement faible, suffisante cependant pour empêcher la remontée brusque dudit piston. Le cylindre 26 se remplit de matière jusqu'à ce que le manomètre 29 enregistre la chute de la pression en dessous de son seuil bas. Aussitôt la pompe 8 est remise en marche et une pression plus élevée est appliquée sur le piston 27 par le vérin 28, pression qui se traduit par le vidage du cylindre 26.

Lorsque l'arrêt de fourniture de matière organique, à la sortie de la buse 12, est désiré, en particulier lorsque la pose du cordon 3 doit être interrompue à l'extrémité d'une portion rectiligne du vitrage sans pour cela que ledit cordon soit coupé, de façon à faire pivoter le vitrage par rapport à la buse 12 pour permettre la continuation de la dépose du cordon 3 le long du côté suivant, les opérations suivantes sont déclenchées. Simultanément les deux vannes 16 et 17 sont fermées, le système de compression/décompression 13 est mis en action, c'est-à-dire que la matière disponible dans la courte longueur de canalisation 11 entre la vanne 17 et la buse 12 est aspirée dans ledit système pour empêcher toute continuation de fourniture de cordon.

Par un fonctionnement identique à celui déjà décrit précédemment, à savoir lecture de la pression par le manomètre 23, remplissage de la chambre 20 si la pression lue est supérieure à la pression de seuil, ou au contraire vidage de la chambre si la pression lue est inférieure à la pression de seuil, la pression de la matière est régulée à la pression de seuil affichée, par exemple 150 bars.

Au redémarrage de la pose du cordon 3 le long de la bordure d'une plaque de verre, c'est-à-dire lorsque la plaque de verre et la buse 12 sont mises en mouvement l'une par rapport à l'autre, il importe qu'instantanément de la matière soit fournie au bon débit et à la bonne pression. A ce moment les deux vannes 16 et 17 sont ouvertes, mais compte tenu de l'inertie de la matière à vaincre, on pallie au manque de matière instantanément fournie, grâce à la compression du système 13 et à la dépression inférieure à la pression de seuil résultant de l'ouverture de la vanne 17 enregistrée par le manomètre 23 par l'application de pression relativement élevée sur le piston 21 de la chambre 20 entraînant l'injection dans le circuit de la matière enfermée dans la chambre 20.

Ainsi donc grâce au sas 15 régulé on obtient un débit régulier de matière à la sortie de la buse 12.

Avantageusement pour des pressions élevées de matières fortement visqueuses, et également des variations importantes de débit à l'alimentation, par exemple lorsque ce débit tombe momentanément à des valeurs quasi nulles, on associera à ce sas régulé 15 un régulateur 25 supplémentaire qui effectuera un premier lissage.

On aboutit ainsi à un procédé simple, mettant en oeuvre peu de matériel, d'une grande fiabilité, permettant à partir d'une matière brute très fortement visqueuse de fournir un débit élevé de l'ordre de 2 à 2,5 kg à la minute avec une régularité de débit pratiquement parfaite sans malaxages, cisaillements excessifs entraînant des élévations trop importantes de températures risquant de conduire à des dégradations du produit. Ainsi par exemple, lorsqu'on débit un cordon destiné à fabriquer un vitrage multiple dans lequel les deux plaques de verre sont espacées de 12 mm ledit cordon doit peser 90 g par mètre. On tolère et on est capable de fabriquer grâce à cette installation un cordon dont le poids est au minimum de 90 grammes et au grand maximum de 95 grammes.

La figure 3 illustre le seconde mode de réalisation de l'invention. Sur cette figure 3 est schématisé un fût 30 surmonté d'un plateau conique 31 muni d'appendices chauffants ici non figurés. Le plateau conique 31 canalise la matière vers une palette 32 d'un corps de pompe alternative 33 actionnée par un vérin hydraulique 34. Le plateau conique est pour sa part pressé sur le fût 30 par des vérins oléopneumatiques 35. En sortie de pompe, la matière est conduite par une canalisation 36 du type flexible chauffant jusqu'à une chambre d'extrusion 37, fermée à son extrémité amont par un piston chauffé 38 dont les déplacements sont commandés par deux vérins hydrauliques 39 symétriques, actionnés par une pompe hydraulique ici non représentée. L'extrémité avale de la chambre 37 est fermée par une vanne 40 qui en coopérant avec une seconde vanne 41 délimite un sas 42. Ce sas 42 alimente l'ensemble d'extrusion proprement dit qui comporte notamment une buse 43 et un système de compression/décompression 44 analogue au système 13 visible à la figure 2. La buse 43 est ici positionnée au-dessus d'une feuille de verre 45, montrée ici en cours de rotation grâce à un bras de pivotement 47 sur lequel elle est immobilisée par une ou plusieurs ventouses 46 amenées au contact du verre au moment de la réalisation d'un angle.

De préférence, le piston 38 comporte une bague 48 en bronze qui coulisse dans le corps cylindrique de la chambre d'extrusion 37. Comme une telle bague ne peut garantir une parfaite étanchéité - qui par ailleurs n'est pas requise pour un bon fonctionnement de l'installation - un peu de matière a tendance à s'échapper dans l'espace 49 de la chambre d'extrusion à l'arrière de la bague 48. Pour éviter que la matière ne s'accumule dans cet espace 49, celui-ci est avantageusement pourvu d'un trou d'échappement. Il en est de même des vannes 40, 41 qui sont pourvues d'échappements ici non schématisés.

Le dispositif de la figure 3 fonctionne de la manière suivante : au démarrage de l'installation, les vannes 40 et 41 sont fermées. La pompe alternative 34 est mise en route de sorte que la chambre d'extrusion 37 est gavée. Ce gavage fait reculer les tiges des pistons 39. Lorsque le remplissage est achevé ce qui est indiqué par un témoin de fin de course d'un vérin 39, la pompe 34 est arrêtée. A ce moment là, la pompe hydraulique actionnant les vérins 39 peut être mise en action pour l'extrusion et après un bref retard tenant compte de la compressiblité du caoutchouc butyl, les vannes 40 et 41 sont ouvertes. Dans la chambre d'extrusion 37, la pression est par exemple égale à 200 bars alors qu'en raison des pertes de charge et surtout de l'écoulement de la matière par la buse de sortie 43, la pression est généralement inférieure à 150 bars au niveau de la vanne 41. Les pressions effectives dépendent de la pression exercée sur les vérins 39 d'une part, et de la section de la buse de sortie d'autre part.

Dès que l'extrusion est interrompue, par exemple pour faire tourner la feuille de verre pour le passage d'un angle, la pompe hydraulique est arrêtée dès que les deux vannes 40 et 41 sont fermées, on emprisonne ainsi une certaine quantité de matière dans le sas 42, matière qui reste à la pression adéquate.

Pour reprendre l'extrusion, il suffit de remettre en route la pompe hydraulique et de réouvrir les vannes. Cette réouverture s'effectue de préférence en commençant par la vanne d'entrée du sas, mais compte tenu d'une certaine élasticité du produit, tout se passe en fait comme si les deux vannes étaient ouvertes simultanément.

Le gavage de la chambre d'extrusion 37 s'effectue de préférence entre deux vitrages, vannes 40 et 41 fermées et pompes hydrauliques arrêtées.

Avantageusement, le circuit d'alimentation 36 alimente deux chambres d'extrusion montées en parallèle. Dans ce cas, l'entrée de chaque chambre est par exemple fermée par une vanne, encore que tout système équivalent d'aiguillage soit utilisable. De plus, chaque chambre d'extrusion est fermée par une vanne, la vanne de la chambre "active'' c'est-à-dire à partir de laquelle s'effectue l'extrusion constituant alors la vanne d'entrée du sas. Un tel circuit présente l'avantage de permettre une exploitation quasi permanente de la pompe montée sur le fût qui peut alimenter la chambre inactive sans perturbation du fonctionnement de l'ensemble. Cette réalisation est particulièrement utile pour des installations où la buse d'extrusion débite pratiquement en continu et/ou des installations où le débit fourni par la pompe à palette est relativement faible ce qui est par exemple le cas avec des caoutchoucs butyl très "durs", choisis en fonction d'une très bonne résistance à la compression, par exemple des caoutchoucs butyl dont la viscosité exprimée en degrés MOONEY est supérieure à 120°, au bout de huit minutes à 40°C (mesure effectuée avec un consistomètre MOONEY selon la recommandation ASTM D 1646-74), en imposant par ailleurs une température du caoutchouc lors de son extrusion par la buse inférieure à 100°C.

Ce bon contrôle du cordon garantit une bonne qualité du vitrage multiple.

De tels cordons de matière organique parfaitement réguliers peuvent également être utilisés dans d'autres domaines que les vitrages multiples, en particulier dans le domaine de l'automobile pour fournir des joints.

## Revendications

1. Procédé de fabrication d'un cordon régulier de matière organique du type à base de caoutchouc butyl, de viscosité élevée supérieure à 35000 poises, selon lequel la matière brute est pompée directement dans un fût (6) au moyen d'un ensemble formé d'une pompe alternative (8) et d'un piston conique chauffant (7) et est conduite par une canalisation (11) jusqu'à une buse (2) de sortie, en faisant intervenir à proximité immédiate de la buse de sortie (2) un ensemble de compression/décompression (13), **caractérisé en ce qu'**on intercale sur la canalisation (11) et à proximité de la buse (12) un sas (15) limité par au moins une vanne d'entrée (16) et une vanne de sortie (17).

2. Procédé selon la revendication 1, **caractérisé en ce que** l'on régule la pression dans le sas (15).

3. Procédé selon la revendication 1 ou 2, **caractérisé en ce qu'**il consiste en outre à réguler la pression de la matière fournie par la pompe (8) à proximité immédiate de la sortie de la pompe.

4. Procédé selon la revendication 1 ou 2, **caractérisé en ce que** le sas (15) est alimenté en matière brute par une chambre d'extrusion alimentée par la pompe (8) lorsque la vanne d'entrée (16) est fermée.

5. Procédé selon la revendication 4, **caractérisé en ce que** le sas (15) est alimenté alternativement par deux chambres d'extrusion.

6. Installation fournissant un cordon de matière organique du type à base de caoutchouc butyl, à viscosité élevée, supérieure à 35000 poises, comprenant une pompe (8) alternative associée à un piston conique chauffant (7) appuyant sur la matière organique contenue dans un fût (6), une canalisation (11) conduisant de la sortie de pompe à une buse (12) de sortie, **caractérisée par** un sas (15) limité par deux vannes (16, 17).

7. Installation selon la revendication 6, **caractérisée en ce que** la portion de canalisation (18) du sas (15) à une longueur comprise entre 40 cm et 1 m et de préférence de l'ordre de 50 à 60 cm.

8. Installation selon la revendication 6 ou 7, **caractérisée en ce qu'**elle comprend un système régulateur de pression (19) constitué par un accumulateur/compensateur branché en dérivation sur la portion (18) de canalisation du sas (15), constitué par une chambre (20) avec piston (21) actionné par un vérin (22), et un manomètre (23) à seuil de pression affiché dont l'indication est utilisée pour commander la fonction accumulation ou compensation de l'accumulateur/compensateur.

9. Installation selon la revendication 8, **caractérisée en ce que** la dérivation de la chambre (20) est branchée sensiblement au milieu de la portion (18) de la canalisation du sas (15).

10. Installation selon la revendication 8 ou 9, **caractérisée en ce qu'**un second régulateur de pression (25) est installé au début de la canalisation (11) à la sortie de la pompe alternative (8).

11. Installation selon la revendication 6 ou 7, **caractérisée en ce qu'**elle comprend un système de régulation de pression constitué par une chambre d'extrusion (37) fermée par un piston (38) commandé par des pistons (39) actionnés par une pompe hydraulique.

12. Installation selon la revendication 11, **caractérisée en ce qu'**elle comprend deux chambres d'extrusion (37) montées en parallèle.

13. Installation selon la revendication 11 ou 12, **caractérisée en ce que** le piston (38) est muni d'une bague en bronze (48).

14. Installation selon l'une des revendications 11 à 13, **caractérisée** en ce **que** l'espace (49) à l'arrière du piston (38) est pourvu d'un trou d'échappement.

15. Installation selon l'une des revendications 6 à 14, **caractérisée en ce qu'**un système à compression/décompression (13), connu en soi, est disposé à l'extrême limite de la canalisation (11) juste avant la buse de sortie (12).

16. Application de l'installation selon l'une des revendications 6 à 15, à la fourniture d'un cordon de matière organique du type à base de caoutchouc butyl, continu et réguler, destiné à constituer le joint intercalaire (3) d'un vitrage multiple.

17. Application selon la revendication 16, **caractérisée en ce que** la vitesse de sortie du cordon ou autrement dit la vitesse de défilement du verre par rapport à la buse en phase de dépôt de cordon est de l'ordre d'une trentaine de cm/s.

18. Application de l'installation selon la revendication 12 à la fourniture d'un cordon dont la viscosité, exprimée en degrés MOONEY est supérieure à 120°, au bout de huit minutes à 40°C.

## Patentansprüche

1. Verfahren zur Herstellung eines gleichmäßigen Stranges aus organischem Material auf der Basis von Butylkautschuk mit einer hohen Viskosität über 35 000 Poise, bei dem das Rohmaterial mittels eines Aufbaus aus einer Pumpe (8) mit hin- und hergehender Pumpbewegung und einem konischen Heizkolben (7) direkt aus einem Behälter (6) gepumpt und durch eine Leitung (11) zu einer Ausgangsdüse (2) geleitet wird, wobei in unmittelbarer Nähe der Ausgangsdüse (2) ein Kompressions-/Dekompressionsaufbau (13) zum Einsatz kommt, **dadurch gekennzeichnet, daß** an der Leitung (11) und in der Nähe der Düse (12) eine durch mindestens ein Eintrittsventil (16) und ein Austrittsventil (17) begrenzte Schleuse (15) angeordnet ist.

2. Verfahren nach Anspruch 1, **dadurch gekennzeichnet, daß** der Druck in der Schleuse (15) reguliert wird.

3. Verfahren nach Anspruch 1 oder 2, **dadurch gekennzeichnet, daß** außerdem der Druck des von der Pumpe (8) gelieferten Materials in unmittelbarer Nähe des Pumpenausgangs geregelt wird.

4. Verfahren nach Anspruch 1 oder 2, **dadurch gekennzeichnet, daß** die Schleuse (15) durch eine von der Pumpe (8) gespeiste Extrusionskammer mit Rohmaterial gespeist wird, wenn das Eintrittsventil (16) geschlossen ist.

5. Verfahren nach Anspruch 4, **dadurch gekennzeichnet, daß** die Schleuse (15) abwechselnd durch zwei Extrusionskammern gespeist wird.

6. Anlage zur Herstellung eines Stranges aus organischem Material auf der Basis von Butylkautschuk mit einer hohen Viskosität über 35 000 Poise, mit einer Pumpe (8) mit hin- und hergehender Pumpbewegung, die mit einem konischen Heizkolben (7) verbunden ist, der auf das in einem Behälter (6) enthaltene organische Material drückt, und einer vom Pumpenausgang zu einer Ausgangsdüse (12) führenden Leitung (11), **gekennzeichnet durch** eine durch zwei Ventile (16,17) begrenzte Schleuse (15).

7. Anlage nach Anspruch 6, **dadurch gekennzeichnet, daß** die Länge des Leitungsabschnitts (18) der Schleuse (15) zwischen 40 cm und 1 m, vorzugsweise 50 bis 60 cm beträgt.

8. Anlage nach Anspruch 6 oder 7, **dadurch gekennzeichnet, daß** sie ein Druckregulierungssystem (19) aufweist, das durch einen Akkumulator/Kompensator gebildet ist, der am Leitungsabschnitt (18) der Schleuse (15) abgezweigt ist, und der von einer Kammer (20) mit einem von einem Zylinder (22) betätigten Kolben (21) gebildet ist, und ein Manometer (23) mit angezeigter Druckschwelle, deren Angabe verwendet wird, um die Akkumulations- oder Kompensationsfunktion des Akkumulators/Kompensators zu steuern.

9. Anlage nach Anspruch 8, **dadurch gekennzeichnet, daß** die Abzweigung der Kammer (20) im wesentlichen in der Mitte des Leitungsabschnitts (18) der Schleuse (15) angeschlossen ist.

10. Anlage nach Anspruch 8 oder 9, **dadurch gekennzeichnet, daß** ein zweiter Druckregler (25) am Anfang der Leitung (11) am Ausgang der Pumpe (8) installiert ist.

11. Anlage nach Anspruch 6 oder 7, **dadurch gekennzeichnet, daß** sie ein Druckregulierungssystem aufweist, das von einer Extrusionskammer (37) gebildet ist, die durch einen Kolben (38) verschlossen ist, der von durch eine hydraulische Pumpe betätigten Kolben (39) gesteuert wird.

12. Anlage nach Anspruch 11, **dadurch gekennzeichnet, daß** sie zwei parallel angebrachte Extrusionskammern (37) aufweist.

13. Anlage nach Anspruch 11 oder 12, **dadurch gekennzeichnet, daß** der Kolben (38) mit einem Bronzering (48) versehen ist.

14. Anlage nach einem der Ansprüche 11 bis 13, **dadurch gekennzeichnet, daß** der Raum (49) an der Rückseite des Kolbens (38) mit einer Auslaßöffnung versehen ist.

15. Anlage nach einem der Ansprüche 6 bis 14, **dadurch gekennzeichnet, daß** ein für sich bekanntes Kompressions/Dekompressionssystem (13) am äußersten Ende der Leitung (11) unmittelbar vor der Ausgangsdüse (12) angeordnet ist.

16. Verwendung der Anlage nach einem der Ansprüche 6 bis 15 zur Herstellung eines kontinuierlichen und regelmäßigen Stranges aus organischem Material auf der Basis von Butylkautschuk, der dafür bestimmt ist, die Zwischendichtung (3) einer Mehrfachverglasung zu bilden.

17. Verwendung nach Anspruch 16, **dadurch gekennzeichnet, daß** die Austrittsgeschwindigkeit des Stranges bzw. die Transportgeschwindigkeit des Glases bezügl. der Düse in der Phase des Aufbringens des Stranges etwa 30 cm/s beträgt.

18. Verwendung der Anlage nach Anspruch 12 zur Herstellung eines Stranges, dessen Viskosität, in Grad Mooney ausgedrückt, mehr als 120° nach 8 Minuten bei 40°C beträgt.

## Claims

1. Process for the production of a uniform cord of organic material of the type based upon butyl rubber, having a high viscosity exceeding 35,000 poises, according to which the raw material is pumped directly from a cask (6) by means of an assembly composed of a reciprocating pump (8) and a heating conical piston (7) and is conducted via a duct (11) to an outlet nozzle (12), with the incorporation in the immediate vicinity of the outlet nozzle (12) of a compression/decompression unit (13), characterized in that a lock (15) limited by at least one inlet valve (16) and one outlet valve (17) is incorporated in the duct (11) and in proximity to the nozzle (12).

2. Process according to Claim 1, characterized in that the pressure in the lock (15) is regulated.

3. Process according to Claim 1 or 2, characterized in that it consists, in addition, of regulating the pressure of the material supplied by the pump (8) in immediate proximity to the outlet from the pump.

4. Process according to Claim 1 or 2, characterized in that the lock (15) is supplied with raw material by an extrusion chamber supplied by the pump (8) while the inlet valve (16) is closed.

5. Process according to Claim 4, characterized in that the lock (15) is supplied alternately from two extrusion chambers.

6. Apparatus supplying a cord of organic material of the type based upon butyl rubber, having a high viscosity exceeding 35,000 poises, comprising a reciprocating pump (8) associated with a heating conical piston (7) pressing upon the organic material contained in a cask (6), a duct (11) leading from the outlet of the pump to an outlet nozzle (12), characterized by a lock (15) limited by two valves (16, 17).

7. Apparatus according to Claim 6, characterized in that the portion of duct (18) in the lock (15) has a length of from 40 cm to 1 m and preferably of the order of 50 to 60 cm.

8. Apparatus according to Claim 6 or 7, characterized in that it comprises a pressure regulating system (19), constituted of an accumulator and balancer unit branched from the duct portion (18) of the lock (15), and constituted of a chamber (20) with piston (21) actuated by a ram (22), and a pressure-gauge (23) having a preset pressure threshold, the indication of which is used for regulating the accumulation or balancing function of the accumulator and balancer unit.

9. Apparatus according to Claim 8, characterized in that the tapping point for the branch to the chamber (20) is substantially at the centre of the portion (18) of the duct in the lock (15).

10. Apparatus according to Claim 8 or 9, characterized in that a second pressure regulator (25) is installed at the commencement of the duct (11) at the outlet from the reciprocating pump (8).

11. Apparatus according to Claim 6 or 7, characterized in that it comprises a pressure regulating system constituted of an extrusion chamber (37), closed by a piston (38) governed by pistons (39) operated by a hydraulic pump.

12. Apparatus according to Claim 11, characterized in that it comprises two extrusion chambers (37), connected in parallel.

13. Apparatus according to Claim 11 or 12, characterized in that the piston (38) is equipped with a bronze ring (48).

14. Apparatus according to one of Claims 11 to 13, characterized in that the space (49) behind the piston (38) is provided with an escape hole.

15. Apparatus according to one of Claims 6 to 14, characterized in that a compression/decompression system (13), itself known, is disposed at the extreme end of the duct (11) just before the outlet nozzle (12).

16. Application of the apparatus according to one of Claims 6 to 15 to the supply of a continuous and uniform cord of organic material of the type based upon butyl rubber, intended for constituting the intermediate seal (3) of a multiple pane.

17. Application according to Claim 16, characterized in that the outlet speed of the cord or, in other words, the speed of passage of the glass relative to the nozzle during the phase of deposition of the cord, is of the order of about 30 cm/s.

18. Application of the apparatus according to Claim 12 to the supply of a cord having a viscosity, expressed in degrees MOONEY, exceeding 120° after eight minutes at 40°C.
